# EUROPÄISCHE PATENTSCHRIFT

(11) **EP 0 843 910 B1**
(45) Veröffentlichungstag und Bekanntmachung des Hinweises auf die Patenterteilung: **12.09.2001**
(21) Anmeldenummer: 97915318.6
(22) Anmeldetag: 28.02.1997
(51) Int. Cl.: H02H 7/085, E05F 15/00

(54) **VORRICHTUNG ZUR ELEKTRONISCHEN ÜBERWACHUNG EINES IN EINEM FAHRZEUG ANGEORDNETEN VERSTELLANTRIEBS**
DEVICE FOR ELECTRONICALLY CONTROLLING A MOTOR VEHICLE DISPLACEMENT MECHANISM
DISPOSITIF DE SURVEILLANCE ELECTRONIQUE D'UN MECANISME DE DEPLACEMENT MONTE DANS UN VEHICULE A MOTEUR

(30) Priorität: 12.06.1996 DE 19623420
(43) Veröffentlichungstag der Anmeldung: 27.05.1998
(73) Patentinhaber: ROBERT BOSCH GMBH, 70442 Stuttgart (DE)
(72) Erfinder: KNAB, Norbert, D-77767 Appenweier (DE)
(86) Internationale Anmeldenummer: DE9700367
(87) Internationale Veröffentlichungsnummer: WO9748158

(56) Entgegenhaltungen:
- EP-A- 0 047 812
- DE-A- 4 416 803

## Beschreibung

### Stand der Technik

Die Erfindung geht aus von einer Vorrichtung zur elektronischen Überwachung eines in einem Fahrzeug angeordneten Verstellantriebs nach der Gattung des Hauptanspruchs. Aus der
DE-A 44 16 803 sind schon ein Verfahren und eine Vorrichtung zum Verstellen fremdkraftbetätigter Teile, insbesondere in einer Fahrzeugkarosserie, bekannt. Hierbei werden mindestens zwei redundant arbeitende Sensorsysteme verwendet, wodurch sich die Zuverlässigkeit bei der Kollisionserkennung verbessert.

### Vorteile der Erfindung

Die erfindungsgemäße Vorrichtung zur elektronischen Überwachung eines in einem Fahrzeug angeordneten Verstellantriebs hat den Vorteil, daß durch die gezielte Auswahl der beiden Sensorsysteme deren Eigenheiten in einer positionsabhängigen Einklemmschutz-Strategie dazu beitragen, zum einen Fehlauslösungen zu verhindern, zum anderen in einem Gefahrenbereich die Sicherheit zu erhöhen. Eine Kombination einer Schaltleiste mit einem inkrementellen Weggeber eines verstellbaren Teils ist deswegen vorteilhaft, weil eine personengefährdende Einklemmsituation dann vorliegt, wenn sich die Person zwischen der das Teil aufnehmenden Schaltleiste und dem bewegten Teil befindet. Deshalb ist es günstig, sowohl die Endlage als auch die Kante des Teils zu überwachen. Genau dies wird mit dem erfindungsgemäßen Verfahren erreicht. Vorschriften wie beispielsweise die FMVSS 118 unterscheiden ebenfalls positionsabhängig bezüglich der Sicherheitsanforderungen.

Bei beispielsweise fast ganz geöffnetem Seitenfenster ist es unwahrscheinlich, daß eine personengefährdende Klemmsituation auftritt. Eine Fehlauslösung durch unbeabsichtigtes Berühren der Schaltleiste wird der Regelfall sein. Um die Fehlauslösewahrscheinlichkeit in diesem Bereich zu reduzieren, spricht der Einklemmschutz nur dann an, wenn sowohl seitens des das verstellbare Teil überwachenden inkrementalen Sensors und seitens der Schaltleiste ein Einklemmen detektiert wird.

Dagegen muß der Einklemmschutz rasch ansprechen, wenn beispielsweise das Seitenfenster kurz vor dem Schließen ist. Geraten beispielsweise die Finger dann an die Schaltleiste, muß der das Teil bewegende Verstellantrieb sofort abgeschaltet werden, um mögliche Quetschungen zu verhindern. Die Sicherheit erhöht sich, wenn in diesem Fall der Einklemmschutz dann anspricht, wenn entweder die Schaltleiste oder der inkrementale Sensor ein Verklemmen detektiert.

Aufgrund der positionsabhängigen Auswertung bietet sich als ein Sensorsystem der inkrementale Sensor an, dessen Signale sowohl zur Positionsermittlung des Teils als auch, beispielsweise über eine Drehzahländerungsauswertung, zur Festellung des Verklemmens des Teils verwendet werden.

Als zweites Sensorsystem empfiehlt sich die Schaltleiste, da sie kostengünstig die Endlage des verstellbaren Teils überwacht.

Aufgrund der Kombination der beiden Sensorelemente wird ein auf der einen Seite kostengünstiger, auf der anderen Seite sicherheitserhöhender und fehlauslösungsreduzierender Einklemmschutz realisiert.

### Zeichnung

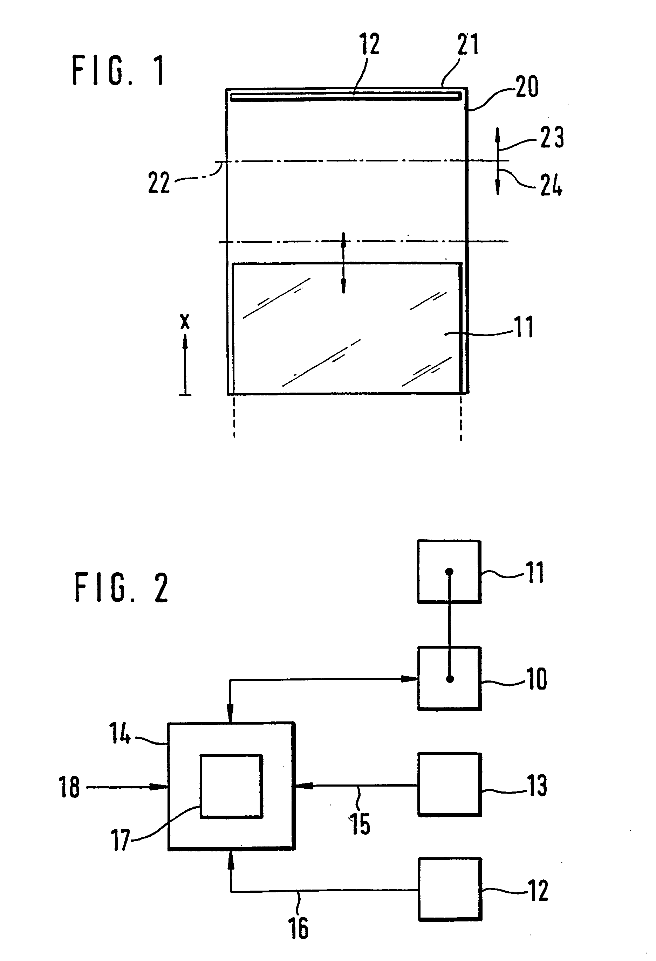

Figur 1 läßt sich die Anordnung und die Einteilung der Positionsbereiche entnehmen, Figur 2 zeigt schematisch die Funktionsweise der Vorrichtung.

### Beschreibung

Ein Teil 11 durchläuft ausgehend von einem offenen Zustand in x-Richtung zuerst den zweiten Positionsbereich 24, bis es an einer Bereichsgrenze 22 in den ersten Positionsbereich 23 gerät. Im geschlossenen Zustand befindet sich das Teil in der Endlage 21, die ein Teil eines Rahmens 20 ist, und der eine Schaltleiste 12 vorgelagert ist.

Ein Verstellantrieb 10 bewegt das Teil 11. Ein inkrementaler Sensor 13 gibt ein Inkrementsignal 15 an eine eine Einklemmschutzauswertung 17 beinhaltende Steueranordnung 14 ab. Eine Schaltleiste 12 gibt ein Schaltleistensignal 16 an die Steueranordnung ab, die Signale mit dem Verstellantrieb 10 austauscht. Über eine Bedienung 18 wird der Steueranordnung 14 die gewünschte Betriebsart mitgeteilt.

Die in den Figuren 1 und 2 gezeigte Anordnung arbeitet folgendermaßen:

Der inkrementale Sensor 13 liefert Inkrementsignale 15. Diese Inkrementsignale 15 werden beispielsweise über einen Zähler drehrichtungsabhängig addiert oder subtrahiert. Der Zählerstand ist ein Maß für die Position, in der sich das Teil 11 gerade befindet. Als inkrementaler Sensor 13 wird beispielsweise ein Hall-Sensor verwendet, abhängig von der Magnetringteilung und der Rotorposition des Elektromotors gibt er Signale ab. In einer anderen Ausführung dient eine Auswertung der Welligkeit (Ripplecount) des Ankerstroms des Elektromotors dazu, die Position zu erfassen. In der Steueranordnung 14 erfolgt neben der Positionserfassung des Teils 11 auch über eine zeitliche Auswertung der Inkrementsignale 15 die Bestimmung der Drehzahl und damit der Geschwindigkeit des Teils. Die aktuelle Drehzahl wird ständig mit einer Grenzdrehzahl verglichen, bei deren Unterschreiten das Teil 11 als klemmmend erkannt wird. Diese Grenzdrehzahl kann positionsabhängig verändert werden.

Die Schaltleiste 12 ist aus DE-A 43 18 448 bekannt. Das Schaltleistensignal 16 wird dann logisch eins, wenn die Schaltleiste 16 gedrückt wird.

Ausgehend vom geöffneten Zustand wird über die Bedienung 18 der Steueranordnung 14 beispielsweise das Schließen des Seitenfensters mitgeteilt. Der Verstellantrieb 10 wird von der Steueranordnung 14 so angesteuert, daß er das Teil 11 in Schließrichtung bewegt. Es wird ständig verglichen, ob sich das

Teil 11 noch innerhalb des zweiten Positionsbereichs 24 befindet, indem der Zählerstand als Maß der gegenwärtigen Position eine parametrierbare Bereichsgrenze 22 noch nicht über- oder unterschreitet. Solange sich das Teil 11 innerhalb des zweiten Positionsbereichs 24 befindet, spricht der Einklemmschutz dann an, wenn der inkrementale Sensor 13 und die Schaltleiste ein Einklemmen detektieren. Dadurch reduziert sich die Fehlauslösewahrscheinlichkeit. Bei Auslösen des Einklemmschutzes erfolgt entweder ein Stoppen oder ein Reversieren des Verstellantriebs 10.

In einem weiteren Ausführungsbeispiel könnte sich nun ein dritter Positionsbereich anschließen, den das Teil während des Schließvorgangs durchläuft. In dem dritten Positionsbereich spricht der Einklemmschutz nur dann an, wenn die Schaltleiste 12 ein Verklemmen anzeigt.

Im Anwendungsfall gemäß Figur 1 kommt das Teil 11 nach Durchlaufen des zweiten Positionsbereichs 24 und dem Überschreiten der Bereichsgrenze 22 in den ersten Positionsbereich 23. In diesem ersten Positionsbereich, der beispielsweise bei einem Seitenfenster 10 cm vor der Schließstellung beginnt, müssen höhere Sicherheitsforderungen erfüllt werden. Der Einklemmschutz spricht an, wenn entweder die Schaltleiste 12 ein Einklemmen detektiert oder ein aus der Drehzahl des Verstellantriebs 10 abgeleitetes Erkennen eines Verklemmens vorliegt. Dadurch wird die Gefahr des Einklemmens von Personen reduziert.

## Patentansprüche

1. Vorrichtung zum Betreiben eines in einem Fahrzeug angeordneten elektrischen Verstellantriebs,
- mit einer Schaltleiste (12), die an einer Endlage (21) des vom Verstellantrieb (10) bewegten Teils (11) angeordnet ist und die Signale bei Druckbelastung an eine Steuerelektronik (14) abgibt,
- mit einem inkrementalen Sensor (13), aus dessen Signale die Steuerelektronik die Position des Teils (11), ein Maß für die Drehzahl des Verstellantriebs (10) und ein aus der Drehzahl abgeleitetes Erkennen eines Einklemmens ermittelt,
- mit mindestens zwei Positionsbereichen, die das Teil (11) bei Öffnen und Schließen durchläuft,
**dadurch gekennzeichnet**,
- daß in einem der Schaltleiste (12) nähergelegenem ersten Positionsbereich (23) ein Einklemmschutz dann anspricht, wenn entweder Signale der Schaltleiste (12) ein Einklemmen detektieren oder ein aus der Drehzahl abgeleitetes Erkennen eines Einklemmens vorliegt und
- daß in einem der Schaltleiste (12) entfernteren zweiten Positionsbereich (24) ein Einklemmschutz dann anspricht, wenn sowohl Signale der Schaltleiste (12) ein Einklemmen detektieren als auch das aus der Drehzahl abgeleitete Erkennen des Einklemmens vorliegt.

2. Vorrichtung nach Anspruch 1, **dadurch gekennzeichnet, daß** der inkrementale Sensor (13) als Hall-Sensor ausgeführt ist.

3. Vorrichtung nach Anspruch 1, **dadurch gekennzeichnet, daß** der inkrementale Sensor (13) ein die Signalwelligkeit des Motorstroms erfassender Sensor ausgeführt ist.

4. Vorrichtung nach Anspruch 1, **dadurch gekennzeichnet, daß** die mindestens zwei Positionsbereiche frei wählbar sind.

5. Verwendung der Vorrichtung nach einem der Ansprüche 1 bis 4, bei einem Fensterheber.

6. Verwendung der Vorrichtung nach einem der Ansprüche 1 bis 4, bei einem Schiebedach.

## Claims

1. Device for operating an electric positioning drive arranged in a vehicle,
- having a switching strip (12) which is arranged at an end position (21) of the part (11) moved by the positioning drive (10) and which emits signals to an electronic control system (14) upon pressure loading,
- having an incremental sensor (13) from whose signals the electronic control system determines the position of the part (11), a measure of the rotational speed of the positioning drive (10), and detects jamming from the rotational speed, and
- having at least two position ranges which are traversed by the part (11) upon opening and closing,
characterized
- in that an anti-jamming system in a first position range (23) situated relatively close to the switching strip (12) responds whenever either signals from the switching strip (12) detect jamming, or jamming is detected from the rotational speed, and
- in that an anti-jamming system in a second position range (24) more remote from the switching strip (12) responds whenever both signals from the switching strip (12) detect jamming and jamming is detected from the rotational speed.

2. Device according to Claim 1, **characterized in that** the incremental sensor (13) is designed as a Hall sensor.

3. Device according to Claim 1, **characterized in that** the incremental sensor (13) is designed as a sensor which detects the signal ripple of the motor current.

4. Device according to Claim 1, **characterized in that** the at least two position ranges are freely selectable.

5. Use of the device according to one of Claims 1 to 4 in a window lifter.

6. Use of the device according to one of Claims 1 to 4 in a sliding roof.

## Revendications

1. Dispositif de mise en oeuvre d'un actionneur électrique équipant un véhicule, comprenant :
• une barrette de commutation (12) prévue au niveau de la position de fin de course (21) de la pièce (11) déplacée par l'actionneur (10), et fournissant des signaux en cas de mise en pression vers une électronique de commande (14),
• un capteur incrémental (13) dont les signaux fournissent à l'électronique de commande la position de la pièce (11) et une mesure de la vitesse de rotation de l'actionneur (10) et la constatation d'un pincement déduit à partir de la vitesse de rotation,
• au moins deux plages de position que la pièce (11) parcourt dans son mouvement d'ouverture et de fermeture,
• **caractérisé en ce que**
• dans une première plage de position (23) proche de la barrette de commutation (12), un moyen de protection anti-pincement se met en oeuvre si soit des signaux de la barrette de commutation (12) détectent un pincement soit si on est en présence d'un pincement déduit de la vitesse de rotation, et
• dans une seconde plage de position (24) éloignée de la barrette de commutation (12), le moyen de protection anti-pincement se met en oeuvre si à la fois les signaux de la barrette de commutation (12) détectent un pincement et si l'on a décelé le pincement à partir de la vitesse de rotation.

2. Dispositif selon la revendication 1,
**caractérisé en ce que**
le capteur incrémental (13) est un capteur à effet Hall.

3. Dispositif selon la revendication 1,
**caractérisé en ce que**
le capteur incrémental (13) est un capteur détectant l'ondulation du signal du courant moteur.

4. Dispositif selon la revendication 1,
**caractérisé en ce qu'**
au moins les deux plages de position sont d'un choix libre.

5. Application du dispositif selon l'une des revendications 1 à 4 pour un lève-vitre.

6. Application du dispositif selon l'une des revendications 1 à 4 pour un toit ouvrant.
